# EUROPÄISCHE PATENTSCHRIFT

(11) **EP 2 848 823 B1**
(45) Veröffentlichungstag und Bekanntmachung des Hinweises auf die Patenterteilung: **16.10.2019**
(21) Anmeldenummer: 14002889.5
(22) Anmeldetag: 20.08.2014
(51) Int. Cl.: F15D 1/00, B64C 21/10

(54) **Strukturbauteil mit einer Ribletoberfläche**
Structural component with a riblet surface
Composant de structure doté d'une surface nervurée

(30) Priorität: 22.08.2013 DE 102013013817
(43) Veröffentlichungstag der Anmeldung: 18.03.2015
(73) Patentinhaber: Airbus Defence and Space GmbH, 85521 Ottobrunn (DE)
(72) Erfinder: Kurtovic, Ante, 33103 Paderborn (DE); Lenczowski, Blanka, 85579 Neubiberg (DE); Steinwandel, Jürgen, 88690 Uhldingen-Mühlhofen (DE)
(74) Vertreter: LKGLOBAL Lorenz & Kopf PartG mbB Patentanwälte

(56) Entgegenhaltungen:
- EP-A2- 1 283 163
- FR-A1- 2 947 313
- JP-A- 2002 266 816
- US-A- 5 114 099
- US-A1- 2011 262 705
- US-B1- 6 345 791

## Beschreibung

### Gebiet der Erfindung

Die Erfindung betrifft ein Strukturbauteil für ein Fahrzeug. Das Strukturbauteil weist eine Oberfläche mit einer Ribletstruktur auf, welche turbulente Strömungen in einem Fluidstrom entlang der Oberfläche reduzieren kann.

### Hintergrund der Erfindung

Riblets bezeichnen eine Oberflächengeometrie bzw. Oberflächenstruktur, die eine Verminderung des Reibungswiderstands auf turbulent überströmten Oberflächen bewirkt. Bei diesen Oberflächengeometrien kann es sich beispielsweise um feine Rippen handeln, die eine scharfe Rippenspitze haben.

In der Strömungsmechanik werden zwei unterschiedliche Strömungsformen unterschieden: die laminare und die turbulente Strömung. Die meisten Strömungen, die bei technischen Anwendungen auftreten, sind turbulent. Turbulente Strömungen weisen in der Regel höhere Reibungsverluste auf als laminare Strömungen. Die erhöhte Reibung in der turbulenten Strömung entsteht durch Impulstransport quer zur Hauptströmungsrichtung in der Grenzschicht. Die Strömung unmittelbar an der überströmten Oberfläche wird durch Wirbelstrukturen dominiert, die energiereiches Fluid an die Wandoberfläche transportieren. Dieser, im Vergleich zur laminaren Strömung, zusätzliche Austausch von Impuls ist der Grund für die in der turbulenten Grenzschicht erhöhte Wandreibung.

Ribletstrukturen werden üblicherweise auf Oberflächen von Fahrzeugen genutzt, welche einer hohen Belastung durch Fluidströme ausgesetzt sind, beispielsweise im Bereich der Luftfahrt oder auch für Wasserfahrzeuge. Eine Ribletstruktur weist eine Mehrzahl von Rippen oder Bergen und Tälern auf.

Die Rippen sind so angeordnet, dass zwischen benachbarten Rippen vertiefte Kanäle bzw. Rillen verlaufen. Üblicherweise verlaufen die Kanäle dabei in einer Richtung entlang der Strömungsrichtung des Fluidstroms über die entsprechende Oberfläche.

Riblets weisen die Eigenschaft auf, dass sie turbulente Fluidströme, beispielsweise in der Luft oder im Wasser, verringern können und das Entstehen einer laminaren Strömung entlang der Oberfläche unterstützen können, wodurch gleichzeitig der Strömungswiderstand entlang der Oberfläche reduziert wird.

Die Kanäle bzw. Rillen verhindern Querbewegungen der Wirbel in der turbulenten Strömung. Auf diese Weise lässt sich die Oberflächenreibung reduzieren. Da die Rillen eine geringe Tiefe im Bereich weniger µ-Meter aufweisen, stellen sie für die Strömung keine erhöhte Rauheit dar.

Bei der Dimensionierung der Rillen ist zu beachten, dass diese für jeden Geschwindigkeitsbereich des Fahrzeugs gesondert ausgelegt werden müssen. Auch wenn die Riblets üblicherweise mittels Folien oder Klebefolien auf die zu behandelnde Oberfläche einfach aufgebracht werden können, ist die Applikation von gleichen Folien auf unterschiedliche Fahrzeuge auf Grund der gesonderten Anpassung der Ribletdimensionen an den vorgesehen Geschwindigkeitsbereich nicht ohne weiteres möglich.

WO 2013/050018 A1 beschreibt eine Ribletfolie und ein Verfahren zum Herstellen einer Ribletfolie.

DE 10 2011 121 546 A1 beschreibt ein Verfahren zum Erzeugen einer Ribletstruktur auf einer Oberfläche eines Strukturbauteils. Die Ribletstruktur wird durch Abtastung der Oberfläche mit Laserpulsen erzeugt.

FR 2 947 313 A1 beschreibt eine Oberflächenstruktur für rotierende Komponenten wie z.B. Propeller. Es ist vorgesehen, dass Oberflächenvertiefungen sowie dazwischenliegende Erhöhungen angeordnet sind. Die Oberflächenvertiefungen können einen in Strömunqsrichtunq der Oberflächenströmunq unregelmäßigen Verlauf aufweisen, z.B. wellenförmig.

### Zusammenfassung der Erfindung

Es kann als Aufgabe der Erfindung betrachtet werden, eine Ribletstruktur anzugeben, die turbulente Strömungen in einem Fluidstrom entlang einer Oberfläche weiter reduziert und mit geringem Aufwand herzustellen ist.

Diese Aufgabe wird gelöst mittels einer Vorrichtung gemäß den unabhängigen Ansprüchen. Weiterbildungen der Erfindung ergeben sich aus den abhängigen Ansprüchen und aus der folgenden Beschreibung.

Gemäß der Erfindung ist ein Strukturbauteil für ein Fahrzeug angegeben. Das Strukturbauteil weist eine Oberfläche mit einer Ribletstruktur auf, wobei die Ribletstruktur eine Mehrzahl von Rillen aufweist. Eine erste Rille weist einen Hauptkanal und mindestens zwei Nebenkanäle auf, wobei sich der Hauptkanal in eine Hauptlängsrichtung erstreckt. Die Hauptlängsrichtung entspricht einer Strömungsrichtung eines Fluids entlang der Oberfläche des Strukturbauteils. Das Strukturbauteil ist dadurch gekennzeichnet, dass der Hauptkanal sich in Hauptlängsrichtung des Strukturbauteils verzweigt, indem die zwei Nebenkanäle in entgegengesetzte Richtungen von dem Hauptkanal abzweigen, wobei der erste Nebenkanal mit einem ersten Winkel zum Hauptkanal und der zweite Nebenkanal mit einem zweiten Winkel zum Hauptkanal von dem Hauptkanal abzweigt, so dass der erste und der zweite Nebenkanal jeweils zumindest abschnittsweise einen Winkel größer als 0° zu der Hauptlängsrichtung aufweisen.

In anderen Worten erstreckt sich zumindest der erste Längsabschnitt einer Rille unter Einschluss des ersten Winkels, welcher größer als 0° ist, quer zu einer Strömungsrichtung eines Fluids entlang der Oberfläche.

Die Hauptlängsrichtung des Strukturbauteils entspricht dabei einer Hauptströmungsrichtung eines Fluids entlang der Oberfläche des Strukturbauteils ohne Berücksichtigung möglicher turbulenter Strömungsanteile. In anderen Worten entspricht die Hauptlängsrichtung bzw. die Hauptströmungsrichtung also einer Bewegungsrichtung eines Fahrzeugs, wenn das Strukturbauteil an einem Fahrzeug befestigt ist.

Das Strukturbauteil kann insbesondere ein metallisches Strukturbauteil sein oder ein Metall oder eine Metalllegierung aufweisen. Die Ribletstruktur ist unmittelbar in eine Oberfläche des Strukturbauteils eingearbeitet und wird nicht etwa durch eine Klebefolie oder ähnliches aufgebracht.

Damit wird eine erhöhte mechanische Festigkeit oder Beständigkeit der Ribletstruktur erreicht. Ebenso kann beispielsweise auch einer vollständigen oder teilweisen Ablösung von strukturierten Folien vorgebeugt werden.

Indem die Ribletstruktur unmittelbar in die Oberfläche des Strukturbauteils eingearbeitet wird, kann beispielsweise einer Verrundung oder Abstumpfung der Rippen vorgebeugt werden, insbesondere wenn das Strukturbauteil aus Metall besteht und daher eine vergleichsweise hohe mechanische Festigkeit hat.

Eine Verrundung oder Abstumpfung einer Ribletstruktur kann zu einer Aufhebung der reibungsvermindernden Wirkung führen, so dass sich anstatt der laminaren Oberflächenströmung eine turbulente Oberflächenströmung bildet.

Eine zumindest abschnittsweise quer zu der Fluidströmungsrichtung ausgerichtete Rille einer Ribletstruktur kann ein weiterer Schutz gegen die Ausbildung turbulenter Oberflächenströmungen sein.

Das Strukturbauteil wie oben und im Folgenden beschrieben eignet sich insbesondere für die Verwendung an Luftfahrzeugen und Wasserfahrzeugen, um den Luftwiderstand bzw. den Wasserwiderstand entlang der Oberfläche des entsprechenden Fahrzeugs zu reduzieren. Bei Luftfahrzeugen eignet sich ein solches Strukturbauteil insbesondere für den Einsatz an Tragflächen, und an diesen insbesondere an einer der Strömung zugewandten Oberfläche. Bei Wasserfahrzeugen kann ein solches Strukturbauteil insbesondere an Flächen eingesetzt werden, die der Wasserströmung ausgesetzt sind, welche sich also während der Fahrt eines Wasserfahrzeugs unter Wasser befinden. Üblicherweise ist der Luftwiderstand bei Wasserfahrzeugen vernachlässigbar, kann jedoch bei Hochgeschwindigkeitswasserfahrzeugen zu einem relevanten Parameter werden, so dass in diesem Bereich das Strukturbauteil auch oberhalb des Wasserspiegels eingesetzt werden kann.

Eine Ribletstruktur weist üblicherweise Rippen und dazwischen liegende Kanäle auf. Die Kanäle sind Vertiefungen in der Oberfläche des Strukturbauteils, wobei diese Vertiefungen wenige µm tief sind, beispielsweise bis zu 10 µm.

Diese Vertiefungen lassen sich beispielsweise mit einem gepulsten Laserstrahl oder mit Feinstrahlplasma erzeugen. Die Kanäle bzw. Rippen werden durch einzelne Laserpulse geformt, die bevorzugt aneinander angrenzen und eine kontinuierliche Struktur bilden. Zur Ausbildung der Ribletstruktur wird bevorzugt ein Femtolaser verwendet.

Die Ribletstruktur wie oben und im Folgenden beschrieben kann insbesondere auch in ein lackiertes Strukturbauteil eingearbeitet werden, nachdem ein Lack oder eine Lackschicht angebracht wurde, damit die Wirksamkeit der Ribletstruktur nicht durch eine nachträgliche Lackierung negativ beeinträchtigt wird.

Gemäß einer Ausführungsform weist die erste Rille einen zweiten Längsabschnitt auf, welcher einen zweiten Winkel zu der Hauptlängsrichtung des Strukturbauteils einschließt, wobei der zweite Winkel größer als 0° und ungleich dem ersten Winkel ist.

In anderen Worten weist die erste Rille einen unregelmäßigen Verlauf mit Bezug zu der Hauptlängsrichtung dar.

Die erste Rille kann einen wellenförmigen oder zahnförmigen Verlauf in Richtung der Hauptlängsrichtung oder in einer Richtung quer zu der Hauptlängsrichtung aufweisen.

Gemäß einer weiteren Ausführungsform variiert eine Tiefe der ersten Rille entlang einer Längsrichtung der ersten Rille.

Dies kann insbesondere bei einer mechanischen Abnutzung auf Grund der Reibung an der Oberfläche des Strukturbauteils dazu führen, dass der Effekt auf Grund der Ribletstruktur nicht vollständig verschwindet, da die Ribletstruktur auf Grund der variierenden Tiefe der Kanäle nicht vollständig abgenutzt wird.

Gemäß einer weiteren Ausführungsform nimmt die Tiefe der ersten Rille entlang der Längsrichtung der ersten Rille zumindest abschnittsweise ab.

Damit ist ein zwischen zwei benachbarten Rippen angeordneter Kanal in Hauptlängsrichtung vorne tiefer als in Hauptlängsrichtung hinten. Das Ausbilden einer laminaren Strömung kann durch diese Ausgestaltung der Rillentiefe begünstigt werden, da beispielsweise bei Flugzeugtragflächen der Anströmdruck in Hauptlängsrichtung vorne, also in Flugrichtung, größer ist als in Hauptlängsrichtung hinten.

Die Rillen bzw. Kanäle werden damit in einer Richtung in Hauptlängsrichtung bzw. in Hauptströmungsrichtung, also von vorne nach hinten, feiner, da sie weniger tief sind.

Gemäß einer weiteren Ausführungsform variiert eine Breite der ersten Rille entlang einer Längsrichtung der ersten Rille.

Ebenso wie die Tiefe kann auch die Breite einer Rille bzw. eines Kanals zwischen zwei Rippen ein Parameter sein, dessen Veränderung in Längsrichtung der Rille das Entstehen einer laminaren Strömung an der Oberfläche des Strukturbauteils unterstützen kann.

Gemäß einer weiteren Ausführungsform nimmt die Breite der ersten Rille entlang der Längsrichtung der ersten Rille zumindest abschnittsweise ab.

Zusammen mit einer abnehmenden Tiefe der Rille wird damit die Struktur und Geometrie der Rillen in Längsrichtung zunehmend feiner.

In diesem Zusammenhang sei allerdings darauf hingewiesen, dass die Tiefe und die Breite einer Rille grundsätzlich unabhängig voneinander sein können und in einer Ausführungsform mit zunehmender Breite die Tiefe einer Rille abnehmen kann.

Gemäß einer weiteren Ausführungsform verläuft die erste Rille zumindest abschnittsweise wellenförmig.

Die erste Rille kann insbesondere Sinus-förmig verlaufen. Alternativ dazu kann die sägezahnförmig verlaufen.

Bei dieser Verlaufsform handelt es sich um die Form der ersten Rille aus einer Draufsicht-Perspektive auf das Strukturbauteil. Die erste Rille hat dabei eine Längsrichtung, welche trotz ihrer Form quer zu einer Hauptströmungsrichtung angeordnet sein kann, also in einem Winkel größer als 0° und kleiner oder gleich 90°.

Gemäß der Erfindung verzweigt sich die erste Rille in Hauptlängsrichtung des Strukturbauteils.

Dabei kann von einem Hauptkanal der ersten Rille in konstanten oder variierenden Abständen in Längsrichtung der ersten Rille jeweils ein Nebenkanal in die gleiche oder in gegenüberliegende Richtungen abzweigen.

Alternativ dazu kann die erste Rille einen Kanal erster Ordnung aufweisen, der in Längsrichtung in zwei oder mehrere Kanäle zweiter Ordnung verzweigt, wobei diese wiederum in zwei oder mehrere Kanäle dritter Ordnung verzweigen. Dies sorgt für eine in Längsrichtung der ersten Rille zunehmende Verästelung und Verfeinerung der Ribletstruktur.

Gemäß einer weiteren Ausführungsform weist das Strukturbauteil eine zweite Rille auf, welche entlang der Längsrichtung der ersten Rille verläuft, wobei ein Abstand zwischen der ersten Rille und der zweiten Rille entlang der Hauptlängsrichtung des Strukturbauteils variiert.

Die zweite Rille kann dabei grundsätzlich nach den gleichen Prinzipien aufgebaut sein wie die erste Rille, wobei diese aber nicht identisch sein müssen.

Gemäß einer weiteren Ausführungsform weicht eine Tiefe der zweiten Rille von einer Tiefe der ersten Rille ab.

Insbesondere kann die Tiefe in benachbarten Abschnitten der ersten und zweiten Rille voneinander abweichen, also auf gleicher Höhe in Längsrichtung der Rillen bzw. in Hauptströmungsrichtung.

Gemäß einem weiteren Aspekt ist ein Luftfahrzeug mit einem Strukturbauteil nach einem der vorhergehenden Ansprüche angegeben.

Das Strukturbauteil kann insbesondere eine Tragfläche oder ein Rumpfabschnitt sein. Dabei erstreckt sich die Längsrichtung der Riblets in einer Richtung entlang der Hauptströmungsrichtung der Luft entlang der Tragflächen oder des Rumpfabschnittes, also entlang einer Längsachse bzw. Flugrichtung des Luftfahrzeugs.

Gemäß einer Ausführungsform ist das Strukturbauteil als Tragfläche ausgeführt, wobei die Hauptlängsrichtung des Strukturbauteils parallel zu einer Längsachse des Luftfahrzeugs verläuft.

Im Folgenden werden mit Bezug zu den Figuren Ausführungsformen der Erfindung beschrieben.

### Kurze Beschreibung der Zeichnungen

Fig. 1A zeigt eine schematische Darstellung einer Ribletstruktur eines Strukturbauteils gemäß einem Ausführungsbeispiel.
Fig. 1B zeigt eine Ribletstruktur.
Fig. 1C zeigt eine Ribletstruktur.
Fig. 2 zeigt ein Luftfahrzeug gemäß einem weiteren Ausführungsbeispiel.
Fig. 3A zeigt eine schematische Darstellung einer Ribletstruktur eines Strukturbauteils gemäß einem weiteren Ausführungsbeispiel.
Fig. 3B zeigt eine schematische Darstellung einer Ribletstruktur eines Strukturbauteils gemäß einem weiteren Ausführungsbeispiel.
Fig. 4 zeigt eine schematische Darstellung einer Ribletstruktur eines Strukturbauteils gemäß einem weiteren Ausführungsbeispiel.

Die Darstellungen in den Figuren sind schematisch und nicht maßstabsgetreu. Werden gleiche Bezugsziffern verwendet, so betreffen diese gleiche oder ähnliche Elemente.

### Detaillierte Beschreibung von Ausführungsbeispielen

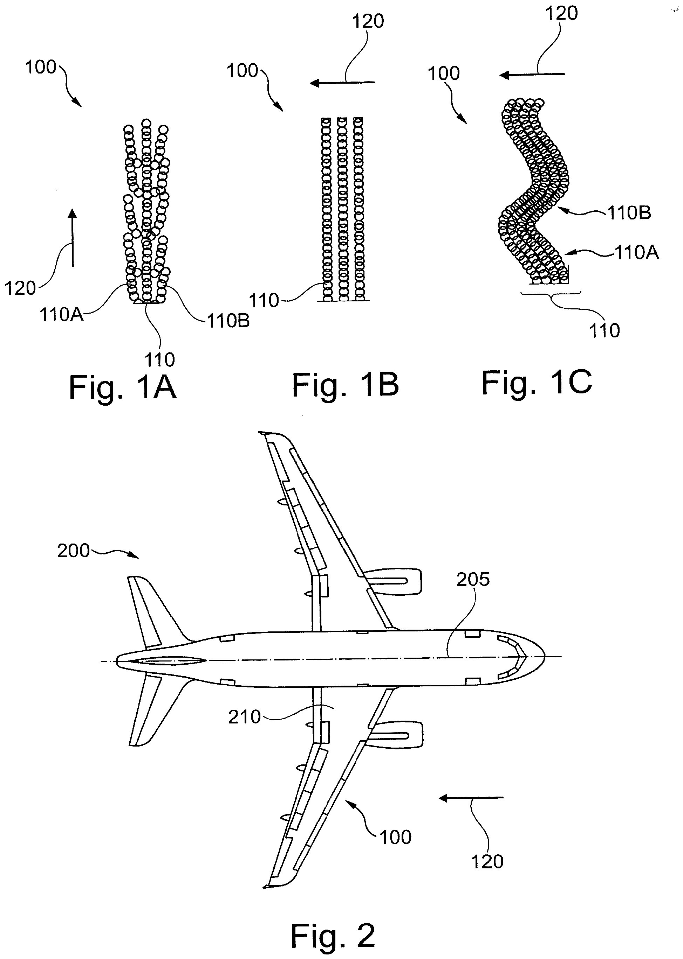

Fig. 1A zeigt eine Ribletstruktur auf einer Oberfläche eines Strukturbauteils. Zur besseren Veranschaulichung ist lediglich eine einzelne Rille dargestellt, welche einen Hauptkanal 110 und davon in entgegengesetzte Richtungen abzweigende Nebenkanäle 110A, 110B aufweist. Der Hauptkanal 110 erstreckt sich in Richtung der Strömungsrichtung 120 eines Fluids wie z.B. Wasser oder Luft entlang der Oberfläche, wohingegen die Nebenkanäle 110A, 110B zumindest abschnittsweise quer zu der Strömungsrichtung verlaufen und ihren Richtungsverlauf sogar ändern.

Die Nebenkanäle 110A, 110B sind damit der erste bzw. zweite Längsabschnitt der in Fig. 1A gezeigten Rille, welche unterschiedliche Winkel zu der Strömungsrichtung 120 einschließen.

Fig. 1B zeigt zum besseren Verständnis der Erfindung eine Ribletstruktur, bei der drei Rillen 110 gezeigt sind. Die drei Rillen verlaufen parallel zueinander und stellen die Kanäle, also die Vertiefungen der Ribletstruktur dar. Zwischen den gezeigten Rillen befinden sich die wellenartigen Erhöhungen.

Die Ribletstruktur in Fig. 1B ist senkrecht zu der Strömungsrichtung angeordnet. Die Tiefe von in Strömungsrichtung 120 hintereinander angeordneten Rillen kann voneinander abweichen, wie bereits weiter oben detailliert beschrieben.

Fig. 1C zeigt zum besseren Verständnis der Erfindung eine einzelne breite Rille 110 auf einer Oberfläche eines Strukturbauteils. Die Rille 110 verläuft wellenförmig quer zu der Strömungsrichtung 120. Auf Grund der Wellenform schließen der erste Längsabschnitt 110A und der zweite Längsabschnitt 110B unterschiedliche bzw. voneinander abweichende Winkel zu der Strömungsrichtung 120 ein.

In den Figuren 1A, 1B und 1C sind die Kanäle zwischen den Rippen durch aneinander angrenzende Kreise gebildet. Dabei entspricht die Längsrichtung eines Kanals der Richtung, in welcher die Kreise nebeneinander angeordnet sind.

Diese Kreise symbolisieren, wie ein Laserpuls gemäß einem Herstellungsverfahren genutzt bzw. gesteuert werden kann, um die Ribletstruktur auf einer Werkstückoberfläche herzustellen. Der Laser wird dabei jeweils in Längsrichtung des Kanals bewegt, bevor der nächste Laserpuls eine Vertiefung in der Werkstückoberfläche erstellt.

Fig. 2 zeigt ein Flugzeug 200 mit einer sich in Flugrichtung erstreckenden Längsachse 205. Der Verlauf der Längsachse 205 ist dabei im Wesentlichen parallel zu einer Strömungsrichtung 120 der Luft mit Bezug zu dem Flugzeug in einem Flugzustand des Flugzeugs.

Quer zu der Längsachse 205 erstrecken sich von dem Rumpf des Flugzeugs zwei Tragflächen 210. Die Tragflächen weisen dabei ein Strukturbauteil wie oben und im Folgenden beschrieben auf. Insbesondere eine in Strömungsrichtung an den Tragflächen vorne befindliche Oberfläche ist so behandelt, dass sie eine wie oben und im Folgenden beschriebene Ribletstruktur aufweist.

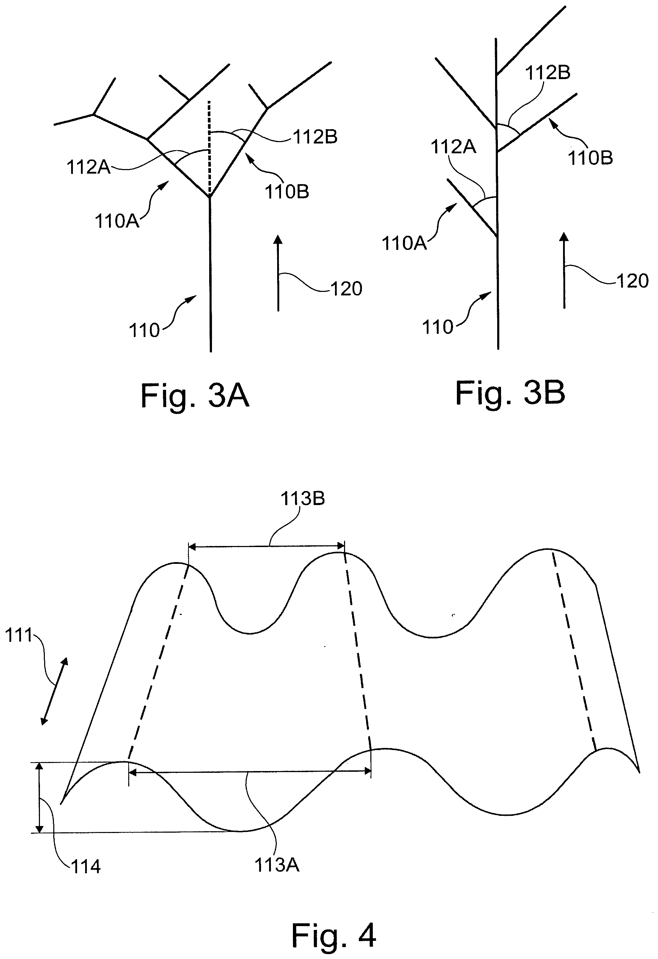

Fig. 3A zeigt eine erste Rille 110, welche einen einzelnen Längsabschnitt erster Ordnung aufweist, der in zwei Längsabschnitte 110A, 110B zweiter Ordnung verzweigt, welche wiederum in Längsabschnitte einer jeweils um den Wert eins höheren Ordnung verzweigen. An jedem Verzweigungspunkt wird der Wert der Ordnung um eins erhöht.

Die Strömungsrichtung 120 kann dabei parallel zu dem Längsabschnitt erster Ordnung verlaufen.

Der Längsabschnitt 110A schließt einen ersten Winkel 112A zu der Strömungsrichtung bzw. zu dem Längsabschnitt erster Ordnung ein, welcher als gestrichelte Linie in Verlängerung gezeichnet ist.

Der Längsabschnitt 110B schließt einen zweiten Winkel 112B zu der Strömungsrichtung bzw. zu dem Längsabschnitt erster Ordnung ein.

Der Längsabschnitt erster Ordnung kann breiter und auch tiefer sein als die Längsabschnitte zweiter Ordnung, welche wiederum breiter und tiefer sein können als die Längsabschnitte dritter Ordnung, und so weiter.

Fig. 3A zeigt also eine sich verästelnde bzw. verzweigte Struktur der ersten Rille.

Fig. 3B zeigt eine Ribletstruktur mit einem durchgängigen Hauptkanal 110, von welchem jeweils abwechselnd Nebenkanäle in eine erste Richtung und in eine entgegengesetzte zweite Richtung auf der Oberfläche des Strukturbauteils abzweigen, wobei die Nebenkanäle 110A, 110B voneinander abweichende Winkel mit dem Hauptkanal 110 einschließen.

Fig. 4 zeigt eine schematische isometrische Darstellung einer Ribletstruktur, wobei die benachbarten Rillen und Rippen eine Wellenform aufweisen. Aus Veranschaulichungsgründen wird ein linearer Längsverlauf der Rillen und Rippen dargestellt, wobei die folgenden Ausführungen grundsätzlich auch für verzweigte oder verästelte Ribletstrukturen gelten.

Die Rillen und Rippen erstrecken sich in Längsrichtung 111 und weisen jeweils eine Tiefe 114 und eine Breite 113A, 113B auf. Die Tiefe wird als maximaler Abstand benachbarter Rillen und Rippen angegeben, wohingegen die Breite als Abstand zwischen den höchsten Punkten benachbarter Rippen angegeben wird.

Die Tiefe einer Rille kann in Längsrichtung 111 einer Rille variieren, insbesondere in Richtung einer Strömungsrichtung eines Fluids entlang der Oberfläche abnehmen. Gleiches gilt für die Breite einer Rille, da die in Strömungsrichtung vorne gemessene Breite 113A größer sein kann als die in Strömungsrichtung hinten gemessene Breite 113B.

## Patentansprüche

1. Strukturbauteil für ein Fahrzeug, das Strukturbauteil aufweisend eine Oberfläche mit einer Ribletstruktur (100);
wobei die Ribletstruktur eine Mehrzahl von Rillen aufweist;
wobei eine erste Rille einen Hauptkanal (110) und mindestens zwei Nebenkanäle (110A, 110B) aufweist,
wobei sich der Hauptkanal in eine Hauptlängsrichtung erstreckt,
wobei die Hauptlängsrichtung einer Strömungsrichtung (120) eines Fluids entlang der Oberfläche des Strukturbauteils entspricht;
**dadurch gekennzeichnet, dass** der Hauptkanal (110) sich in Hauptlängsrichtung des Strukturbauteils verzweigt, indem die zwei Nebenkanäle (110A, 110B) in entgegengesetzte Richtungen von dem Hauptkanal (110) abzweigen, wobei der erste Nebenkanal (110A) mit einem ersten Winkel (112A) zum Hauptkanal (110) und der zweite Nebenkanal (110B) mit einem zweiten Winkel (112B) zum Hauptkanal (110) von dem Hauptkanal (100) abzweigt, so dass der erste und der zweite Nebenkanal jeweils zumindest abschnittsweise einen Winkel größer als 0° zu der Hauptlängsrichtung aufweisen.

2. Strukturbauteil nach Anspruch 1,
wobei der zweite Winkel (112B) ungleich dem ersten Winkel ist.

3. Strukturbauteil nach Anspruch 1 oder 2,
wobei eine Tiefe (114) der ersten Rille (110) entlang einer Längsrichtung der ersten Rille variiert.

4. Strukturbauteil nach Anspruch 3,
wobei die Tiefe der ersten Rille entlang der Längsrichtung der ersten Rille zumindest abschnittsweise abnimmt.

5. Strukturbauteil nach einem der vorhergehenden Ansprüche,
wobei eine Breite (113) der ersten Rille (110) entlang einer Längsrichtung der ersten Rille variiert.

6. Strukturbauteil nach Anspruch 5,
wobei die Breite der ersten Rille entlang der Längsrichtung der ersten Rille zumindest abschnittsweise abnimmt.

7. Strukturbauteil nach einem der vorhergehenden Ansprüche,
wobei die erste Rille zumindest abschnittsweise wellenförmig verläuft.

8. Strukturbauteil nach einem der vorhergehenden Ansprüche,
aufweisend eine zweite Rille, welche entlang der Längsrichtung der ersten Rille verläuft;
wobei ein Abstand zwischen der ersten Rille und der zweiten Rille entlang der Hauptlängsrichtung des Strukturbauteils variiert.

9. Strukturbauteil nach Anspruch 8,
wobei eine Tiefe der zweiten Rille von einer Tiefe der ersten Rille abweicht.

10. Luftfahrzeug (200) mit einem Strukturbauteil nach einem der vorhergehenden Ansprüche.

11. Luftfahrzeug (200) nach Anspruch 10,
wobei das Strukturbauteil als Tragfläche (210) ausgeführt ist;
wobei die Hauptlängsrichtung des Strukturbauteils parallel zu einer Längsachse (205) des Luftfahrzeugs verläuft.

## Claims

1. Structural component for a vehicle, the structural component having a surface with a riblet structure (100) ;
the riblet structure having a multiplicity of grooves;
a first groove having a main channel (110) and at least two secondary channels (110A, 110B),
the main channel extending in a main longitudinal direction,
the main longitudinal direction corresponding to a flow direction (120) of a fluid along the surface of the structural component;
**characterized in that** the main channel (110) branches in the main longitudinal direction of the structural component, **in that** the two secondary channels (110A, 110B) branch off from the main channel (110) in opposite directions, wherein the first secondary channel (110A) branches off from the main channel (100) at a first angle (112A) to the main channel (110), and the second secondary channel (110B) branches off from the main channel (100) at a second angle (112B) to the main channel (110), so that the first and the second secondary channel each have an angle of greater than 0° to the main longitudinal direction, at least in some sections.

2. Structural component according to Claim 1,
wherein the second angle (112B) is not equal to the first angle.

3. Structural component according to Claim 1 or 2,
wherein a depth (114) of the first groove (110) varies along a longitudinal direction of the first groove.

4. Structural component according to Claim 3,
wherein the depth of the first groove decreases along the longitudinal direction of the first groove, at least in some sections.

5. Structural component according to one of the preceding claims,
wherein a width (113) of the first groove (110) varies along a longitudinal direction of the first groove.

6. Structural component according to Claim 5,
wherein the width of the first groove decreases along the longitudinal direction of the first groove, at least in some sections.

7. Structural component according to one of the preceding claims,
wherein the first groove extends in the shape of a wave, at least in some sections.

8. Structural component according to one of the preceding claims,
having a second groove which extends along the longitudinal direction of the first groove; wherein a distance between the first groove and the second groove varies along the main longitudinal direction of the structural component.

9. Structural component according to Claim 8,
wherein a depth of the second groove differs from a depth of the first groove.

10. Aircraft (200) having a structural component according to one of the preceding claims.

11. Aircraft (200) according to Claim 10,
wherein the structural component is formed as a wing (210),
wherein the main longitudinal direction of the structural component extends parallel to a longitudinal axis (205) of the aircraft.

## Revendications

1. Composant structurel destiné à un véhicule, le composant structurel comportant une surface pourvue d'une structure micro-rainurée (Riblets) (100) ;
la structure micro-rainurée comportant une pluralité de rainures ;
une première rainure comportant un canal principal (110) et au moins deux canaux secondaires (110A, 110B), le canal principal s'étendant dans une direction longitudinale principale,
la direction longitudinale principale correspondant à une direction d'écoulement (120) d'un fluide le long de la surface du composant structurel ;
**caractérisé en ce que** le canal principal (110) se ramifie dans la direction longitudinale principale du composant structurel par dérivation des deux canaux secondaires (110A, 110B) du canal principal (110) dans des directions opposées, le premier canal secondaire (110A) dérivant du canal principal (100) en formant un premier angle (112A) avec le canal principal (110) et le deuxième canal secondaire (110B) dérivant du canal principal (100) en formant un deuxième angle (112B) avec le canal principal (110) de sorte que les premier et deuxième canaux secondaires forment chacun au moins partiellement un angle supérieur à 0° avec la direction longitudinale principale.

2. Composant structurel selon la revendication 1,
le deuxième angle (112B) n'étant pas égal au premier angle.

3. Composant structurel selon la revendication 1 ou 2,
la profondeur (114) de la première rainure (110) variant dans une direction longitudinale de la première rainure.

4. Composant structurel selon la revendication 3,
la profondeur de la première rainure diminuant au moins par portions dans la direction longitudinale de la première rainure.

5. Composant structurel selon l'une des revendications précédentes,
une largeur (113) de la première rainure (110) variant dans une direction longitudinale de la première rainure.

6. Composant structurel selon la revendication 5,
la largeur de la première rainure diminuant au moins par portions dans la direction longitudinale de la première rainure.

7. Composant structurel selon l'une des revendications précédentes,
la premier rainure s'étendant de manière ondulée au moins par portions.

8. Composant structurel selon l'une des revendications précédentes, comportant une deuxième rainure qui s'étend dans la direction longitudinale de la première rainure ;
la distance entre la première rainure et la deuxième rainure variant dans la direction longitudinale principale du composant structurel.

9. Composant structurel selon la revendication 8,
la profondeur de la deuxième rainure différant de la profondeur de la première rainure.

10. Aéronef (200) comprenant un composant structurel selon l'une des revendications précédentes.

11. Aéronef (200) selon la revendication 10,
le composant structurel étant conçu comme une surface porteuse (210) ;
la direction longitudinale principale du composant structurel étant parallèle à l'axe longitudinal (205) de l'aéronef.
